# EUROPÄISCHE PATENTSCHRIFT

(11) **EP 3 580 731 B1**
(45) Veröffentlichungstag und Bekanntmachung des Hinweises auf die Patenterteilung: **21.07.2021**
(21) Anmeldenummer: 18713855.7
(22) Anmeldetag: 22.03.2018
(51) Int. Cl.: G07C 9/00, B60R 25/24

(54) **VERFAHREN ZUM BETREIBEN EINES AUTHENTIFIZIERUNGSSYSTEMS UND AUTHENTIFIZIERUNGSSYSTEM**
METHOD FOR OPERATING AUTHENTICATION SYSTEM AND AUTHENTICATION SYSTEM
PROCÉDÉ DE FONCTIONNEMENT D'UN SYSTÈME D'AUTHENTIFICATION ET SYSTÈME D'AUTHENTIFICATION

(30) Priorität: 28.04.2017 DE 102017109293
(43) Veröffentlichungstag der Anmeldung: 18.12.2019
(73) Patentinhaber: HUF Hülsbeck & Fürst GmbH & Co. KG, 42551 Velbert (DE)
(72) Erfinder: NEUHOFF, Stefan, 45239 Essen (DE); SCHINDLER, Mirko, 42549 Velbert (DE)
(74) Vertreter: Zenz Patentanwälte Partnerschaft mbB
(86) Internationale Anmeldenummer: PCT/EP2018/057235
(87) Internationale Veröffentlichungsnummer: WO 2018/197116

(56) Entgegenhaltungen:
- EP-A1- 1 473 426
- EP-A2- 0 735 219
- EP-A2- 0 965 710
- EP-A2- 2 800 068
- US-A1- 2003 095 040

## Beschreibung

Die Erfindung betrifft ein Verfahren zum Betreiben eines Authentifizierungssystems eines Fahrzeugs zur Authentifizierung eines portablen ID-Gebers. Insbesondere betrifft die Erfindung ein Authentifizierungssystem, mit welchem eine Authentifizierung eines portablen ID-Gebers gegenüber dem Fahrzeug vorgenommen werden kann, um Fahrzeugfunktionen für einen Bediener freizugeben, der den portablen ID-Geber mit sich führt.

Aus dem Stand der Technik sind unterschiedliche sogenannte schlüssellose Zugangssysteme bekannt. Diese basieren auf der Kommunikation einer fahrzeugseitigen Infrastruktur mit einem portablen ID-Geber über Funk. Im Rahmen der durchgeführten Funkkommunikation wird die angestrebte Authentifizierung vorgenommen, beispielsweise durch Austausch und Prüfung verschlüsselter Berechtigungsdaten.

Im Bereich der schlüssellosen Zugangssysteme ist die Nutzung niederfrequenter (LF) sowie hochfrequenter (HF) Funkwellen bekannt und vielfach verwendet. Auch die kombinierte Kommunikation mittels LF-/HF-Systemen ist aus dem Stand der Technik bekannt und im Dokument EP0965710 A2 beschrieben.

Bei funkbasierten Berechtigungssystemen ist die Sicherheit, insbesondere vor Kompromittierung der durchgeführten Funkkommunikation, von entscheidender Bedeutung. Im Rahmen der Freigabe einer Fahrzeugfunktion unter Nutzung portabler ID-Geber ist die Bestimmung einer Position, eines Abstands oder einer ähnlichen Größe, beispielsweise zur Plausibilisierung der durchgeführten bidirektionalen Kommunikation, aus dem Stand der Technik bekannt. Beispielsweise ist bekannt, die Signalstärke einer LF-Funkkommunikation zwischen portablem ID-Geber und einer fahrzeugseitigen Authentifizierungsanordnung auszuwerten. Ein ergänzendes oder alternativ vorgesehenes Konzept zur Erhöhung der Sicherheit vor Kompromittierung kann schlicht darauf beruhen, dass die Sendeleistung einer LF-Kommunikation begrenzt wird. Durch Begrenzung der Sendeleistung einer LF-Kommunikation zwischen Fahrzeug und ID-Geber wird sichergestellt, dass beispielsweise ein LF-Wecksignals, welches von dem Fahrzeug zu dem ID-Geber gesendet wird, nur dann von dem jeweils anderen Kommunikationspartner empfangen werden kann, wenn ein Maximalabstand zwischen ID-Geber und Fahrzeug nicht überschritten wird.

Viele der bekannten Authentifizierungssysteme weisen nach wie vor den prinzipiellen Nachteil auf, dass eine LF-Funkkommunikation oder eine HF-Funkkommunikation verlängerbar ist, beispielsweise im Rahmen sogenannter Relay-Station-Attacken. Zur Vermeidung derartiger oder anderer Kompromittierungen sind Gegenmaßnahmen erforderlich, die jedoch teilweise aufwändig sind.

Es ist daher Aufgabe der Erfindung, die bekannten Authentifizierungsverfahren zu verbessern, sodass sie einen wirkungsvollen, zugleich aber auch vergleichsweise unaufwändigen Schutz vor einer Kompromittierung der übermittelten Signale bereitstellen.

Die Aufgabe wird erfindungsgemäß durch ein Verfahren mit den Merkmalen des Patentanspruchs 1 und durch ein Authentifizierungssystem mit den Merkmalen des Patentanspruchs 14 gelöst.

Das Verfahren sieht vor, dass ein Authentifizierungssystem eines Fahrzeugs betrieben wird, um einen portablen ID-Geber gegenüber dem Fahrzeug zu authentifizieren. Die Authentifizierung dient dem Zweck, eine Fahrzeugfunktion für einen Bediener freizugeben, der den portablen ID-Geber mit sich führt.

Das Authentifizierungssystem umfasst den portablen ID-Geber und eine fahrzeugseitige Authentifizierungsanordnung.

Die Authentifizierungsanordnung umfasst eine Anzahl von UWB-Antennen, jedenfalls wenigstens eine erste UWB-Antenne und eine zweite UWB-Antenne. Die erste UWB-Antenne und die zweite UWB-Antenne sind voneinander beabstandet an dem Fahrzeug angeordnet. Das Verfahren sieht zumindest die folgenden Schritte vor:
A) Auswählen einer UWB-Antenne aus der Anzahl der UWB-Antennen der Authentifizierungsanordnung als ausgewählte UWB-Antenne, wobei das Auswählen der UWB-Antenne in Schritt A) das Erstellen einer Liste umfasst, welche eine Priorisierung der UWB-Antennen vorgibt, sodass bereits vor Durchführung einer UWB-Kommunikation eine Reihenfolge der vorhandenen UWB-Antennen bestimmt wird, in welcher die UWB-Antennen angesteuert werden. Das Auswählen der UWB-Antenne erfolgt zumindest
   - in Abhängigkeit von einer Empfangssignalstärke oder mehreren Empfangssignalstärken wenigstens eines LF-Signals, das zwischen dem ID-Geber und der Authentifizierungsanordnung gesendet wird, wobei beide möglichen Senderichtungen vorgesehen sein können, und/oder
   - in Abhängigkeit von einer Empfangssignalstärke oder mehreren Empfangssignalstärken wenigstens eines HF-Signals, das zwischen dem ID-Geber und der Authentifizierungsanordnung gesendet wird, wobei beide möglichen Senderichtungen vorgesehen sein können, und/oder
   - in Abhängigkeit von wenigstens einem Annäherungssignal eines Annäherungssensors oder mehrerer Annäherungssensoren, die an dem Fahrzeug angeordnet sind;
      wobei zumindest die Schritte B)-E) sequentiell für jede UWB-Antenne der priorisierenden Liste unter Berücksichtigung der durch die Liste vorgegebenen Priorisierung der UWB-Antennen wiederholt werden, bis eine vorgegebene Abbruchbedingung erreicht ist;
B) Ansteuern der ausgewählten UWB-Antenne zum Durchführen einer UWB-Kommunikation zwischen dem ID-Geber und der Authentifizierungsanordnung;
C) Durchführen der UWB-Kommunikation zwischen dem ID-Geber und der Authentifizierungsanordnung;
D) Erfassen einer Laufzeit eines UWB-Signals der UWB-Kommunikation zwischen dem ID-Geber und der ausgewählten UWB-Antenne;
E) Prüfen, ob die Laufzeit des UWB-Signals kleiner ist als eine vorgegebene Maximallaufzeit.

Ein wesentlicher Aspekt des erfindungsgemäßen Verfahrens beruht auf der Nutzung von Ultrabreitband-Kommunikation.

Prinzipiell ist die Verwendung von Ultrabreitband-Funksignalen (UWB-Funksignalen) für manche Anwendungen aus dem Stand der Technik bekannt und im Dokument EP2800068 A2 veröffentlicht.

Für die Nutzung stehen jedoch erst seit kurzem marktbereite Transceiver zur Verfügung.

Die Ultrabreitbandtechnologie ist in ihren Grundlagen seit Langem bekannt. Sie ist jedoch erst in jüngerer Vergangenheit, nicht zuletzt durch liberalere Regulation, für die Benutzung in weiten Anwendungsbereichen zugänglich geworden.

Bei der Ultrabreitbandtechnologie handelt es sich um eine Nahbereichs-Funkkommunikation, die auf dem Aussenden kurzer Signalpulse basiert, welche innerhalb einer großen Frequenzbandbreite eine Vielzahl von Frequenzen abdeckt. Die Breite der abgedeckten Frequenzbereiche ist insbesondere von regulatorischen Vorgaben des entsprechenden territorialen Gebiets abhängig.

Ein Nachteil der UWB-Kommunikation im Verhältnis zu der etablierten LF- und/oder HF-Kommunikation ist der bei vielen gegenwärtig verfügbaren, zur UWB-Kommunikation geeigneten Transceivern vergleichsweise hohe Pulsstrombedarf.

Die UWB-Kommunikation weist jedoch den prinzipiellen Vorteil auf, dass aufgrund der Aussendung von Pulsen eine Entfernungsbestimmung mittels eines Laufzeit-basierten Ansatzes vorgenommen wird, worauf oft auch mit der Bezeichnung der Time-Of-Flight-Methode Bezug genommen wird. Beispielsweise kann die Entfernung zwischen der ersten UWB-Antenne und dem portablen ID-Geber ermittelt werden, indem ein UWB-Signal von der ersten UWB-Antenne zu dem portablen ID-Geber gesendet wird, ein UWB-Transceiver des portablen ID-Gebers dieses beantwortet eine mit der ersten UWB-Antenne gekoppelte Einheit, beispielsweise ein Steuermittel, das erfasste Antwortsignal auswertet. Dies geschieht unter Auswertung der vergangenen Zeit zwischen Aussenden und Empfang. Berücksichtigt werden die Strecke zu dem ID-Geber hin, die Bearbeitungszeit innerhalb des ID-Gebers und die Strecke von dem ID-Geber weg zu der ersten UWB-Antenne hin. Wenn, wie in diesem Beispiel, die Laufzeit fahrzeugseitig ausgewertet wird, muss lediglich die Bearbeitungszeit innerhalb des ID-Gebers fahrzeugseitig hinterlegt sein, sodass eine entsprechende Korrektur der fahrzeugseitig gemessenen Zeit zwischen Aussenden des UWB-Signals und Empfang der UWB-Antwort vorgenommen werden kann.

Erfahrungsgemäß ist die Genauigkeit einer derart vorgenommenen Entfernungsbestimmung auf UWB-Basis bei den üblichen vorgesehenen Größenordnungen von Entfernungen deutlich höher als es bei anderen Verfahren der Fall ist wie beispielsweise einer Signalstärkebestimmung von LF-Signalen oder der Triangulation von LF-Signalen. Die Genauigkeit liegt bei den UWB-basierten Entfernungsbestimmungen häufig in der Größenordnung von 10 bis 20 cm.

Dadurch, dass die reine Laufzeit des UWB-Signals gegenüber der Bearbeitungszeit relativ kurz ist, würde eine zusätzliche Bearbeitung des Signals, beispielsweise für eine Manipulation des Signals etwa im Rahmen einer Relay-Station-Attacke, aufgrund der unerwartet hohen Gesamtdauer zwischen Aussenden eines UWB-Signals und Eintreffen der entsprechenden Antwort erkannt werden können. Kompromittierungen, beispielsweise in der Art der beschrieben Relay-Station-Attacken, sind dadurch, wenn überhaupt, nur mit sehr aufwändigen Methoden möglich.

Ein weiterer Vorteil, der sich durch die Nutzung der UWB-Signale ergibt, besteht darin, dass aufgrund der Vielzahl der verwendeten Frequenzen eine Abschattung der Signale sehr unwahrscheinlich ist. Dies liegt darin begründet, dass zumindest für einige der gleichzeitig verwendeten Frequenzen mit hoher Wahrscheinlichkeit immer eine Sichtlinie zwischen Sender und Empfänger besteht. Ein Grund hierfür ist, dass für manche Frequenzen Beugungseffekte oder Reflektionen erwartet werden können.

Erfindungsgemäß ist vorgesehen, dass vor dem Ansteuern einer UWB-Antenne zum Durchführen einer UWB-Kommunikation aus der Anzahl der UWB-Antennen eine ausgewählte UWB-Antenne gewählt wird. Dadurch, dass eine ausgewählte UWB-Antenne gewählt wird, kann unter günstigen Umständen erreicht werden, dass die zur Entfernungsbestimmung benötigten Informationen unter Ansteuerung nur eines Teils der UWB-Antennen der Authentifizierungsanordnung gewonnen werden können. Wenn dies der Fall ist, kann auf eine weitere UWB-Kommunikation unter Verwendung der weiteren vorhandenen UWB-Antennen der Authentifizierungsanordnung verzichtet werden. Mit dem erfindungsgemäßen Verfahren wird also in vorteilhafter Weise erreicht, dass der Energiebedarf zur Durchführung von UWB-Kommunikation während eines Authentifizierungsvorgangs in vorteilhafter Weise reduziert wird.

Bevorzugt ist die erste UWB-Antenne Bestandteil einer ersten Fahrzeug-UWB-Schnittstelle und die zweite UWB-Antenne Bestandteil einer zweiten Fahrzeug-UWB-Schnittstelle.

Besonders bevorzugt ist die erste UWB-Antenne Bestandteil eines ersten UWB-Transceivers und die zweite UWB-Antenne Bestandteil eines zweiten UWB-Transceivers. Dies erlaubt einen kompakten Aufbau und eine einfache Konfiguration.

Bevorzugt sind die erste und die zweite UWB-Schnittstelle mit einem selben Steuermittel gekoppelt wie beispielsweise einem kraftfahrzeugseitigen Steuergerät.

Erfindungsgemäß ist vorgesehen, dass die ausgewählte UWB-Antenne angesteuert wird. Infolge des Ansteuerns der ausgewählten UWB-Antenne wird eine UWB-Kommunikation zwischen dem ID-Geber und der Authentifizierungsanordnung ermöglicht. Beispielsweise kann vorgesehen sein, dass die ausgewählte UWB-Antenne ein UWB-Signal zu dem ID-Geber sendet, der das Signal, beispielsweise mit einem UWB-Transceiver des ID-Gebers, empfängt und beantwortet, und hieraufhin die Antwort von der ausgewählten UWB-Antenne empfangen wird und bevorzugt im Anschluss von einem fahrzeugseitigen zentralen Steuermittel ausgewertet wird. Alternativ kann auch vorgesehen sein, dass der ID-Geber, wiederum über seinen UWB-Transceiver, das Aussenden eines UWB-Signals veranlasst, dieses von der ausgewählten UWB-Antenne erfasst wird und beantwortet wird, woraufhin die als UWB-Signal ausgesendete Antwort von dem ID-Geber erfasst und ausgewertet wird.

Um das Ansteuern der ausgewählten UWB-Antenne technisch zu realisieren, kann beispielsweise vorgesehen sein, dass die Authentifizierungsanordnung UWB-Transceiver aufweist, welche eine UWB-Antenne als Bestandteil aufweisen. Beispielsweise kann in einem regulären Zustand vorgesehenen sein, dass der erste UWB-Transceiver mit der ersten UWB-Antenne in einem nicht sende- und empfangsbereiten Zustand befindlich ist, und dass ein fahrzeugseitiges Steuergerät nach erfolgter Auswahl einer UWB-Antenne den UWB-Transceiver mit der ausgewählten UWB-Antenne ansteuert, um die UWB-Antenne in einen empfangsbereiten Zustand zu versetzen. Alternativ kann auch vorgesehen sein, dass das fahrzeugseitige Steuergerät die UWB-Antenne in analoger Weise in einen sendebereiten Zustand versetzt und das Versenden des erwähnten UWB-Signals über die ausgewählte UWB-Antenne veranlasst.

Mit dem Senden eines UWB-Signals und dem Beantworten des UWB-Signals ist das erfindungsgemäß vorgesehene Durchführen der UWB-Kommunikation erfolgt. Anschließend kann das Erfassen der Laufzeit des UWB-Signals erfolgen und die vorgesehene Prüfung vorgenommen werden, ob die Laufzeit des UWB-Signals kleiner ist als eine vorgegebene Maximallaufzeit.

Wie bereits vorstehend erwähnt, kann je nach Ausgestaltung des Verfahrens für die Auswertung der Laufzeit sowohl der ID-Geber genutzt werden, der das Ergebnis hiernach an eine fahrzeugseitige Instanz wie beispielsweise das zentrale Steuermittel sendet oder alternativ eine fahrzeugseitige Instanz wie beispielsweise das zentrale Steuermittel für die Auswertung der Laufzeit bestimmt werden.

Wenn die Laufzeit des UWB-Signals kleiner ist als eine vorgegebene Maximallaufzeit, kann fahrzeugseitig davon ausgegangen werden, dass keine Verlängerung der durchgeführten bidirektionalen UWB-Kommunikation vorgenommen wurde. Die Maximallaufzeit kann, je nach Sicherheitsbedürfnis, derart angepasst werden, dass einerseits eine hinreichend hohe Genauigkeit der Entfernungsbestimmung möglich ist, und andererseits davon ausgegangen werden kann, dass innerhalb der erfassten Maximallaufzeit eine erfolgte Kompromittierung des UWB-Signals ausgeschlossen oder weitgehend ausgeschlossen werden kann.

Ein wesentlicher Aspekt der Erfindung beruht darauf, dass aus der Anzahl der vorhandenen UWB-Antennen eine ausgewählte Antenne ermittelt wird, die sodann zum Durchführen einer UWB-Kommunikation angesteuert wird. Dadurch, dass aus den vorhandenen UWB-Antennen eine UWB-Antenne ausgewählt wird, wird dem Implementierer des Verfahrens für eine konkrete Anwendung eine Möglichkeit an die Hand gegeben, in Abhängigkeit von einem oder mehreren zuvor erfassten Parametern den für eine UWB-Kommunikation erforderlichen Energieaufwand zu reduzieren. Je nachdem, welche Praktikabilitäts- und/oder Sicherheitsbedürfnisse von dem implementierenden Entwickler verfolgt werden oder zu beachten sind, kann auf unterschiedliche Parameter zurückgegriffen werden. Zweckmäßig ist, dass zur Erfassung dieser Parameter ein weniger energieintensives Verfahren genutzt wird als die UWB-Kommunikation oder dass auf ohnehin vorhandene, bereits erfasste, Parameter zurückgegriffen wird. Auf Grundlage dieser Daten kann dann mittels eines Steuermittels, vorzugsweise eines fahrzeugseitigen Steuermittels, bestimmt werden, mit welcher UWB-Antenne eine UWB-Kommunikation durchgeführt wird und/oder in welcher Reihenfolge verschiedene der vorhandenen UWB-Antennen für eine UWB-Kommunikation genutzt werden.

Eine Möglichkeit besteht darin, die Auswahl der UWB-Antenne in Abhängigkeit von einer Empfangssignalstärke eines LF-Signals vorzunehmen, das zwischen dem ID-Geber und der Authentifizierungsanordnung gesendet wird. Hierfür wird ein für LF-Kommunikationen eingerichteter portabler ID-Geber sowie wenigstens eine, bevorzugt mehr als eine an dem Fahrzeug angeordnete LF-Schnittstelle vorausgesetzt. Der Begriff der LF-Schnittstelle bezieht sich dabei auf eine Gesamtheit von Einrichtungen, die für eine LF-Kommunikation erforderlich sind und umfasst wenigstens eine LF-Antenne sowie eine Sende- und Empfangsschaltung, die mit der LF-Antenne gekoppelt ist. Eine derartige Anordnung ist im Zusammenhang mit den eingangs erwähnten sogenannten schlüssellosen ID-Gebern sowieso in vielen Fällen vorgesehen. Beispielsweise kann ein LF-Signal von einer oder mehreren LF-Schnittstellen der fahrzeugseitigen Authentifizierungsanordnung zu dem ID-Geber gesendet werden, der diese mit einer LF-Empfangs- oder LF-Sende- und Empfangseinrichtung empfängt und hiernach die Signalstärke bestimmt. Beispielsweise kann vorgesehen sein, dass zwei an unterschiedlichen Positionen des Fahrzeugs angeordnete LF-Schnittstellen jeweils ein unterschiedlich kodiertes LF-Signal zu dem ID-Geber senden, und der ID-Geber die erfassten Signalstärkewerte, beispielsweise in Form von RSSI-Werten, gemeinsam mit dem jeweiligen Code des ID-Gebers an die Fahrzeugseitigen LF-Schnittstellen zurücksendet. Derartige Daten können sodann von einer fahrzeugseitigen Steuereinrichtung ausgewertet werden. Als Resultat der Auswertung kann beispielsweise bestimmt werden, dass vorrangig diejenige UWB-Antenne aus der Anzahl der UWB-Antennen der Authentifizierungsanordnung angesteuert wird, welche der LF-Schnittstelle mit dem stärksten LF-Signal am nächsten ist.

Es kann dann beispielsweise die UWB-Antenne als erste ausgewählte UWB-Antenne gewählt werden, welche der LF-Schnittstelle am nächsten positioniert ist, die das LF-Signal mit der größten Signalstärke ausgesendet hat.

Eine ähnliche Vorgehensweise kann mit HF-Signalen vorgenommen werden. Es kann beispielsweise ein HF-Signal zwischen ID-Geber und Authentifizierungsanordnung, entweder von dem ID-Geber zu der Authentifizierungsanordnung oder von der Authentifizierungsanordnung zu dem ID-Geber, gesendet werden und dessen Signalstärke, beispielsweise an zwei verschiedenen Empfangsstellen der fahrzeugseitigen Authentifizierungsanordnung, erfasst werden.

Ein anderer Ansatz kann beispielsweise darauf basieren, dass Daten eines Annäherungssensors genutzt werden. Beispielsweise kann ein ohnehin in dem Fahrzeug vorgesehener Annäherungssensor oder ein eigens zu diesem Zweck am Fahrzeug angeordneter Annäherungssensor bei Annäherung des Bedieners ein Annäherungssignal ausgibt, das von einem mit dem Annäherungssensor gekoppelten Steuermittel erfasst wird, woraufhin das Steuermittel diejenige UWB-Antenne aus einer Anzahl der UWB-Antennen ansteuert, welche dem Annäherungssensor als am nächsten ist.

Es kann vorgesehen sein, dass die angesteuerte UWB-Antenne für einen Empfang von UWB-Signalen freigeschaltet wird und dass das Initiieren einer Kommunikation seitens des ID-Gebers erfolgt. Es kann vorgesehen sein, dass dies in Reaktion auf eine entsprechende LF-Signalanweisung seitens der fahrzeugseitigen Authentifizierungsanordnung erfolgt, die über eine LF-Schnittstelle der Authentifizierungsanordnung übermittelt wird. Alternativ kann die ausgewählte UWB-Antenne zum Senden eines UWB-Signals genutzt werden, mit dem die UWB-Kommunikation der Authentifizierungsanordnung mit dem ID-Geber initiiert wird. Wesentlich ist, dass die Auswahl zur Inbereitsetzung einer oder mehrerer UWB-Antennen aus einer Mehrzahl von UWB-Antennen erfolgt in Abhängigkeit von zuvor gewonnenen Parametern, insbesondere in der oben genannten Weise.

Vorteilhafte und/oder bevorzugte Weiterbildungen der Erfindung sind in den Unteransprüchen genannt.

In einer Weiterbildung des Verfahrens ist vorgesehen, dass zunächst die oben genannten Schritte B) bis E) mit einer ersten ausgewählten UWB-Antenne durchgeführt werden und, wenn die Laufzeit des UWB-Signals zwischen dem ID-Geber und der ersten ausgewählten Antenne größer ist als eine vorgegebene Maximallaufzeit, zumindest die Schritte B) bis E) erneut durchgeführt werden. Das erneute Durchführen B) bis E) wird im Gegensatz zu dem ersten Durchführen der Schritte B) bis E) mit einer zweiten ausgewählten UWB-Antenne durchgeführt mit dem Ziel zu prüfen, ob die Laufzeit des UWB-Signals zwischen dem ID-Geber und der zweiten ausgewählten Antenne kleiner ist als die vorgegebene Maximallaufzeit.

Es ist also vorgesehen, dass zusätzlich zu der Durchführung des erfindungsgemäßen Verfahrens unter Verwendung einer ersten ausgewählten Antenne im Misserfolg eine zweite UWB-Antenne der fahrzeugseitigen Authentifizierungsanordnung ausgewählt wird zur Durchführung einer Abstandsbestimmung. Dadurch wird erreicht, dass die Zuverlässigkeit des Verfahrens erhöht wird. In einem Fall, in dem beispielsweise ein - wenn auch unwahrscheinliches - Abschatten der ersten UWB-Antenne vorliegt, wird auch bei eigentlich genügend geringer Entfernung des ID-Gebers vom Fahrzeug ein falsches Ergebnis der Entfernungsbestimmung vermieden. Durch die sequenzielle Wiederholung der Verfahrensschritte B)-E) zunächst mit der ersten UWB-Antenne und dann mit der zweiten UWB-Antenne wird unter Berücksichtigung einer Priorisierung der UWB-Antennen durchgeführt. Dadurch wird in vielen Fällen erreicht, dass das Verfahren bereits mit der ersten ausgewählten Antenne erfolgreich ist. Der Gewinn an Zuverlässigkeit geht somit nicht mit einer unverhältnismäßig hohen Erhöhung des Energiebedarfs einher.

Gemäß der beanspruchten Erfindung ist vorgesehen, dass das Auswählen der UWB-Antenne das Erstellen einer Liste umfasst, welche eine Priorisierung der UWB-Antennen vorgibt. Unter Berücksichtigung der erstellten Liste werden die Schritte B) bis E) unter Berücksichtigung der durch die Liste vorgegebenen Priorisierung der UWB-Antennen wiederholt, bis eine vorgegebene Abbruchbedingung erreicht ist. Das bedeutet, dass bereits vor Durchführung einer UWB-Kommunikation eine Reihenfolge der vorhandenen UWB-Antennen bestimmt wird, in welcher die UWB-Antennen angesteuert werden. Dadurch wird bereits vor Durchführen einer UWB-Kommunikation zur Bestimmung der Entfernung des ID-Gebers festgelegt, in welcher Reihenfolge die UWB-Antennen der Authentifizierungsanordnung angesteuert werden. Die Schritte B) bis E) werden, sequenziell für jede UWB-Antenne der priorisierenden Liste, wiederholt durchgeführt, bis eine Abbruchbedingung erreicht ist. Als Abbruchbedingung kann beispielsweise vorgesehen sein, dass das Ende der Liste erreicht ist. Eine andere Abbruchbedingung kann darin bestehen, dass die Entfernung des ID-Gebers als innerhalb der Zone befindlich erkannt wird, in welcher eine Maximallaufzeit der UWB-Kommunikation unterschritten wird.

Eine andere vorteilhafte Weiterbildung der Erfindung kann vorsehen, dass die Abbruchbedingung umfasst, dass die Laufzeit des UWB-Signals zwischen dem ID-Geber und der ausgewählten UWB-Antenne für eine vorgegebene Unteranzahl aus der Anzahl der UWB-Antennen eine vorgegebene Maximalabweichung nicht überschreitet. Dadurch, dass eine vorgegebene Anzahl von UWB-Antennen, also bevorzugt mindestens zwei oder mehr UWB-Antennen den ID-Geber als innerhalb der Sicherheitszone befindlich erkennen müssen, wird die Fehleranfälligkeit des Systems verringert, insbesondere wird die Wahrscheinlichkeit erhöht, dass das erfindungsgemäße Verfahren noch funktioniert, auch wenn eine der UWB-Antennen defekt ist.

Eine weitere Ausgestaltung des erfindungsgemäßen Verfahrens kann vorsehen, dass vor einer Wiederholung der Schritt B) bis E) die Liste angepasst wird. Mit anderen Worten kann vorgesehen sein, dass vor Ansteuern einer nächsten ausgewählten UWB-Antenne eine Anpassung der Liste vorgenommen wird. Insbesondere kann vorgesehen sein, dass die Anpassung der Liste in Abhängigkeit von der Laufzeit des UWB-Signals zwischen ID-Geber und der während der unmittelbar zuvor vorgenommenen Verfahrensfolge der Schritte B) bis E) angesteuerten UWB-Antenne berücksichtigt wird. Eine derartige Anpassung kann in Abhängigkeit von der Anzahl und Position der vorhandenen LF-Schnittstellen und/oder HF-Schnittstellen und/oder Annäherungssensoren dazu führen, dass unter Verwendung der inzwischen zusätzlich vorgenommenen Abstandsbestimmungen auf Grundlage eines UWB-Signals eine präzisere Eingrenzung eines Aufenthaltsorts des ID-Gebers vorgenommen werden kann. Auf Basis einer derartigen Ermittlung des Aufenthaltsorts kann dann, beispielsweise seitens eines fahrzeugseitigen Steuermittels der Authentifizierungsanordnung, eine dynamische Anpassung der erstellten Liste vorgenommen werden.

Gemäß einer weiteren vorteilhaften Ausgestaltung kann beispielsweise vorgesehen sein, dass eine UWB-Antenne vor der Wiederholung der Schritte B) bis E) von der Liste entfernt wird, wenn die Laufzeit des UWB-Signals eine vorgegebene maximale Laufzeitkontrollabweichung von der Laufzeit der UWB-Signale einer Menge der UWB-Antennen überschreitet und/oder eine Signalstärke des UWB-Signals eine vorgegebene maximale Signalstärkekontrollabweichung von der Signalstärke der UWB-Signale einer Menge der UWB-Antennen überschreitet.

Mit anderen Worten kann vorgesehen sein, dass eine Auswertung der während der Durchführung des Verfahrens bereits gewonnenen UWB-Kommunikationsdaten, insbesondere Laufzeiten und/oder Signalstärken, vorgenommen wird, um zu erkennen, wenn eine bestimmte UWB-Antenne der Anzahl der UWB-Antennen gegenüber den bisher erhaltenen Daten deutlich abweichende Ergebnisse liefert. Bei geeigneter Wahl der vorgegebenen maximalen Laufzeitkontrollabweichungen und/oder der vorgegebenen maximalen Signalstärkekontrollabweichung kann eine bei den UWB-Antennen vorliegende Anomalie, beispielsweise aufgrund eines Defekts oder einer Abschattung, erkannt werden. Durch Nicht-Berücksichtigung dieser UWB-Antenne im weiteren Verlauf des Verfahrens kann die Genauigkeit des erhaltenen Ergebnisses erhöht werden.

Gemäß einer möglichen Durchführung des Verfahrens kann vorgesehen sein, dass die Authentifizierungsanordnung eine erste LF-Schnittstelle aufweist, welche der ersten UWB-Antenne zugeordnet ist und eine zweite LF-Schnittstelle aufweist, welche der zweiten LF-Antenne zugeordnet ist.

In dieser Weiterbildung ist ferner vorgesehen, dass eine erste LF-Kommunikation mit einem ersten LF-Signal zwischen dem ID-Geber und der ersten LF-Schnittstelle sowie eine zweite LF-Kommunikation mit einem zweiten LF-Signal zwischen dem ID-Geber und der zweiten LF-Schnittstelle durchgeführt wird. Das erste LF-Signal und das zweite LF-Signal können sich beispielsweise durch einen übermittelten Code voneinander unterscheiden.

Im Rahmen dieser Weiterbildung kann vorgesehen sein, dass der ID-Geber eine erste Signalstärke des ersten LF-Signals und eine zweite Signalstärke des zweiten LF-Signals erfasst. Sodann werden die Signalstärken an die Authentifizierungsanordnung übermittelt, woraufhin wobei ein Steuermittel der Authentifizierungsanordnung diejenige der ersten UWB-Antenne und der zweiten UWB-Antenne für das erste Ansteuern der UWB-Antenne auswählt, welche derjenigen LF-Schnittstelle zugeordnet ist, die das LF-Signal mit der höchsten aus der ersten erfassten Signalstärke und der zweiten erfassten Signalstärke ausgesendet hat.

Analog kann anstelle einer LF-Schnittstelle eine HF-Schnittstelle genutzt werden.

Eine alternative Weiterbildung des erfindungsgemäßen Verfahrens kann vorsehen, dass die Authentifizierungsanordnung einen ersten Annäherungssensor aufweist, welcher der ersten UWB-Antenne zugeordnet ist, sowie einen zweiten Annäherungssensor aufweist, welcher der zweiten UWB-Antenne zugeordnet ist. Gemäß dieser Weiterbildung gibt derjenige des ersten Annäherungssensors und des zweiten Annäherungssensors ein Annäherungssignal aus, welcher eine Annäherung des Bedieners erfasst. Dabei ist vorgesehen, dass ein Steuermittel der Authentifizierungsanordnung, wenn es das Annäherungssignal erfasst, diejenige der ersten UWB-Antenne und der zweiten UWB-Antenne als ausgewählte UWB-Antenne auswählt, die demjenigen des ersten Annäherungssensors und des zweiten Annäherungssensors zugeordnet ist, der das Annäherungssignal ausgegeben hat.

Insbesondere kann vorgesehen sein, dass die erste UWB-Antenne einen geringeren Abstand von dem ersten Annäherungssensor aufweist als von dem zweiten Annäherungssensor und dass die zweite UWB-Antenne einen geringeren Abstand von dem zweiten Annäherungssensor aufweist als von dem ersten Annäherungssensor. Dadurch kann beispielsweise erreicht werden, dass die Auswahl der UWB-Antennen unter Berücksichtigung von Daten ermittelt werden kann, die mit ohnehin vorhandenen Annäherungssensoren, wie beispielsweise kapazitiven Sensoren in Türgriffen, gekoppelt sind.

Eine weitere Weiterbildung kann vorsehen, dass das Durchführen der UWB-Kommunikation zumindest zeitweise parallel mit dem Durchführen einer LF-Kommunikation oder einer HF-Kommunikation erfolgt.

Ferner kann beispielsweise vorgesehen sein, dass zur Freigabe von Fahrzeugfunktionen erfasste UWB-Signallaufzeiten für eine Mindestzeitdauer als gültig angesehen werden, und dass während der Mindestzeitdauer keine UWB-Kommunikation von der Authentifizierungsanordnung durchgeführt wird. Mit anderen Worten kann, wenn die Authentifizierungsanordnung den ID-Geber innerhalb einer die Freigabe von Fahrzeugfunktionen berechtigenden Abstandszone erkannt hat, eine Steuereinrichtung der Authentifizierungsanordnung für eine vorgegebene Mindestzeitdauer unterstellt, dass der ID-Geber innerhalb dieser Abstandszone verbleibt. Dadurch kann der für UWB-Kommunikationen aufzubringende Energieaufwand reduziert werden, wobei eine Art Trade-Off-Abwägung zwischen Energieeinsparung und möglichem Sicherheitsverlust zu treffen ist.

Eine Authentifizierung des ID-Gebers selbst kann erfolgen, wenn die oben beschriebenen Voraussetzungen erfüllt sind und also das System den ID-Geber als innerhalb der Secure Bubble befindlich erkannt wurde. Eine Implementierung der Authentifizierung erfolgt nach Belieben des Implementierers des Verfahrens. Beispielsweise kann eine Authentifizierung auf Basis eines Austauschs kryptographischer Informationen zwischen dem ID-Geber und einem Steuermittel des Authentifizierungssystems des Fahrzeugs erfolgen, wie beispielsweise dem kraftfahrzeugseitigen Steuergerät.

Die eigentliche Authentifizierung des ID-Gebers kann beispielsweise zum Abschluss des Verfahrens erfolgen, wobei in einer Ausführung die erfolgreich verlaufene Prüfung des Schritts E, dass die Laufzeit des UWB-Signals zwischen dem ID-Geber und wenigstens einer ausgewählten UWB-Antenne kleiner ist als die vorgegebene Maximallaufzeit, eine notwendige Bedingung dafür ist, dass eine Authentifizierung und eine Funktionsfreigabe vorgenommen werden.

Wenn die Prüfung des Schritts E die vorgegebene Maximallaufzeit als unterschritten bestätigt, kann eine Prüfung der Authentifizierung anhand von mittels Funk ausgetauschter Informationen zwischen ID-Geber und Authentifizierungsanordnung fahrzeugseitig vorgenommen werden. Der Austausch der Informationen erfolgt bevorzugt mittels einer, beispielsweise bidirektionalen, LF-, HF- und/oder UWB-Kommunikation, zwischen dem ID-Geber und der fahrzeugseitigen Authentifizierungsanordnung.

Besonders bevorzugt erfolgt der Informationsaustausch bereits vorher, nämlich im Rahmen der UWB-Kommunikation des Schritts C. Dadurch, dass dieselbe UWB-Kommunikation für den authentifizierenden Informationsaustausch und die Entfernungsbestimmung genutzt wird, wird zeit- und sicherheitsoptimiert die Gefahr einer Kompromittierung des Signals weitgehend, wenn nicht sogar vollständig, ausgeschlossen.

In einer speziellen Weiterbildung kann der Austausch der kryptographischen Informationen im Rahmen der zwischen dem ID-Geber und der Authentifizierungsanordnung vorgenommenen Kommunikation, dem oben erläuterten Schritt C, vorgenommen werden, unter anderem mit dem Vorteil eines Geschwindigkeitsgewinns.

Eine erfolgreiche Authentifizierung und gegebenenfalls Freigabe von Fahrzeugfunktionen ist somit auf beliebige Weise durchführbar, jedoch muss als notwendige Voraussetzung zumindest mittels des erfindungsgemäßen Verfahrens sichergestellt sein, dass die Laufzeit des UWB-Signals zwischen dem ID-Geber und zumindest einer der ausgewählten Antennen kleiner ist als die vorgegebene Maximallaufzeit was gleichbedeutend ist mit der Validierung, dass der ID-Geber innerhalb der sogenannten Secure Bubble befindlich ist.

Beispielsweise kann vorgesehen sein, dass, nachdem die Prüfung in Schritt E mit zumindest einer ausgewählten Antenne die Anwesenheit des ID-Gebers innerhalb eines Maximalabstands von der ausgewählten Antenne bestätigt hat, mittels einer HF-Kommunikation, einer LF-Kommunikation und/oder einer UWB-Kommunikation zwischen dem ID-Geber und einem kraftfahrzeugseitigen Steuergerät des Authentifizierungssystems kryptographische Informationen übermittelt werden und anhand der Auswertung der kryptographischen Informationen in dem kraftfahrzeugseitigen Steuergerät die Authentifizierung des ID-Gebers abgeschlossen wird und die Freigabe der Funktion oder Funktionen erfolgt. Alternativ oder zusätzlich kann der Austausch der kryptographischen Informationen teilweise oder vollständig auch vor dem Abschluss der Prüfung des Schritts E erfolgen.

In einer Ausführungsform ist eine Freigabe der Funktion für den Bediener fahrzeugseitig gesperrt, solange innerhalb eines vorgegebenen Maximalzeitraums nicht die Prüfung in Schritt E mit zumindest einer ausgewählten Antenne die Anwesenheit des ID-Gebers innerhalb eines Maximalabstands von der ausgewählten Antenne bestätigt hat.

Ein weiterer Gedanke der Erfindung betrifft ein Authentifizierungssystem eines Fahrzeugs zur Authentifizierung eines portablen ID-Gebers gegenüber dem Fahrzeug zur Freigabe von Fahrzeugfunktionen für einen Bediener, der den portablen ID-Geber mit sich führt.

Das Authentifizierungssystem weist den portablen ID-Geber und eine fahrzeugseitige Authentifizierungsanordnung auf. Der portable ID-Geber weist wenigstens eine erste ID-Geber-UWB-Schnittstelle mit einer ID-Geber-UWB-Antenne und die Authentifizierungsanordnung weist wenigstens eine erste Fahrzeug-UWB-Schnittstelle mit einer ersten UWB-Antenne und eine zweite Fahrzeug-UWB-Schnittstelle mit einer zweiten UWB-Antenne auf, die voneinander beabstandet an dem Fahrzeug angeordnet sind. Die erste ID-Geber-UWB-Schnittstelle und die Fahrzeug-UWB-Schnittstellen sind zur UWB-Kommunikation miteinander eingerichtet.

Ein Steuermittel der Authentifizierungsanordnung ist eingerichtet, die Durchführung eines Verfahrens gemäß einer der vorstehend und/oder nachfolgend erläuterten Vorgehensweisen zu steuern und zu überwachen.

Merkmale des Verfahrens sind mit Merkmalen des Authentifizierungssystems kombinierbar und umgekehrt. Die Vorteile des Authentifizierungssystems sind in analoger Weise auch als Vorteile des Verfahrens anzusehen.

Weitere Einzelheiten, Merkmale und Vorteile des erfindungsgemäßen Verfahrens und seiner Weiterbildung ergeben sich aus der nachfolgenden Beschreibung in Zusammenhang mit den Zeichnungen, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind. Es zeigen:
Fig. 1: Eine schematische Darstellung eines Authentifizierungssystems;
Fig. 2: ein Flussdiagramm einer beispielhaften Verfahrensfolge des erfindungsgemäßen Verfahrens;
Fig. 3: ein Flussdiagramm einer alternativen Verfahrensfolge des erfindungsgemäßen Verfahrens.

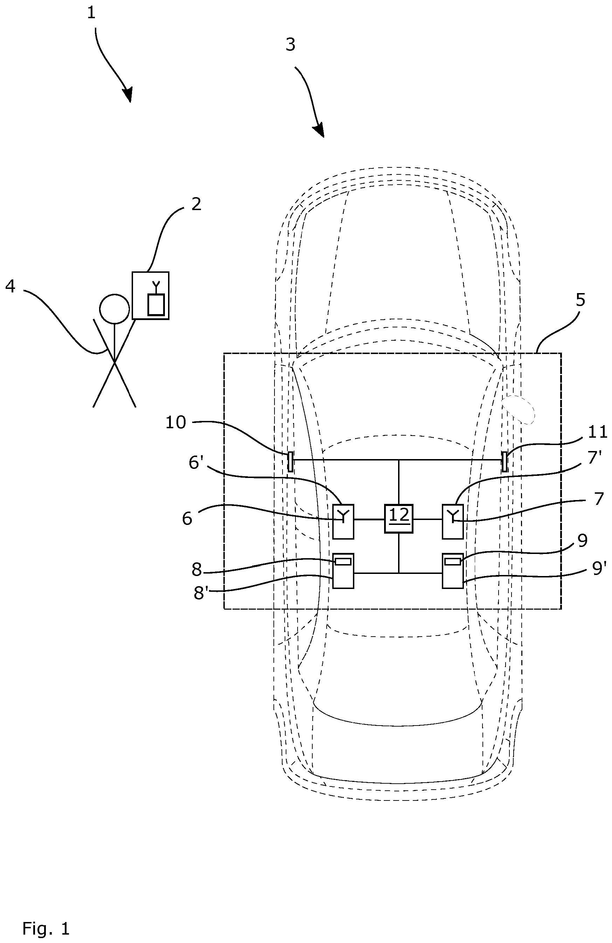

Fig. 1 ist ein Authentifizierungssystem 1 zu entnehmen, mit dem das erfindungsgemäße Verfahren durchgeführt werden kann. Das Authentifizierungssystem 1 dient der Authentifizierung eines ID-Gebers 2 gegenüber einem Fahrzeug 3. Fig. 1 zeigt eine Situation, in welcher der ID-Geber 2 sich in Besitz eines Bedieners 4 befindet. Mit dem erfindungsgemäßen Verfahren kann die Authentifizierung des portablen ID-Gebers 2 gegenüber dem Fahrzeug 3 vorgenommen werden, damit der Bediener 4, der den portablen ID-Geber mit sich führt, auf Fahrzeugfunktionen zugreifen kann wie beispielsweise einem Starten des Fahrzeugs 3 oder einem Öffnen einer oder mehrerer der Fahrzeugtüren.

Das Authentifizierungssystem umfasst neben dem portablen ID-Geber 2 eine fahrzeugseitige Authentifizierungsanordnung 5. Die Authentifizierungsanordnung weist zumindest eine Anzahl von UWB-Antennen auf, wobei zumindest eine erste UWB-Antenne 6 und eine zweite UWB-Antenne 7 vorgesehen sind, die voneinander beabstandet an dem Fahrzeug angeordnet sind. In der gezeigten Ausgestaltung ist die erste UWB-Antenne 6 als integrales Element eines ersten UWB-Transceivers 6' und die zweite UWB-Antenne 7 als integrales Element eines zweiten UWB-Transceivers 7' vorgesehen.

Die Authentifizierungsanordnung weist ferner eine erste LF-Schnittstelle 8' mit wenigstens einer ersten LF-Antenne 8 und eine zweite LF-Schnittstelle 9' mit einer zweiten LF-Antenne 9 sowie einen ersten Annäherungssensor 10 und einen zweiten Annäherungssensor 11 auf. Der erste Annäherungssensor 10 ist innerhalb eines Türgriffs der linken Fahrzeugtür angeordnet, während der zweite Annäherungssensor 11 innerhalb des Türgriffs der Beifahrertür angeordnet ist. Sowohl die erste LF-Schnittstelle 8 als auch der erste Annäherungssensor 10 weisen einen geringeren Abstand von der ersten UWB-Antenne 6 als von der zweiten UWB-Antenne 7 auf. Ferner weisen sowohl die zweite LF-Schnittstelle 9 als auch der zweite Annäherungssensor 11 einen geringeren Abstand von der zweiten UWB-Antenne 7 als von der ersten UWB-Antenne 6 auf.

In der gezeigten Ausgestaltung sind die UWB-Transceiver, die LF-Schnittstellen und die Annäherungssensoren mit einem kraftfahrzeugseitigen Steuergerät 12, und über dieses auch miteinander, gekoppelt. Das kraftfahrzeugseitige Steuergerät 12 ist geeignet, als Steuermittel der Authentifizierungsanordnung ein erfindungsgemäßes Verfahren und seine Weiterbildungen zu steuern und zu überwachen.

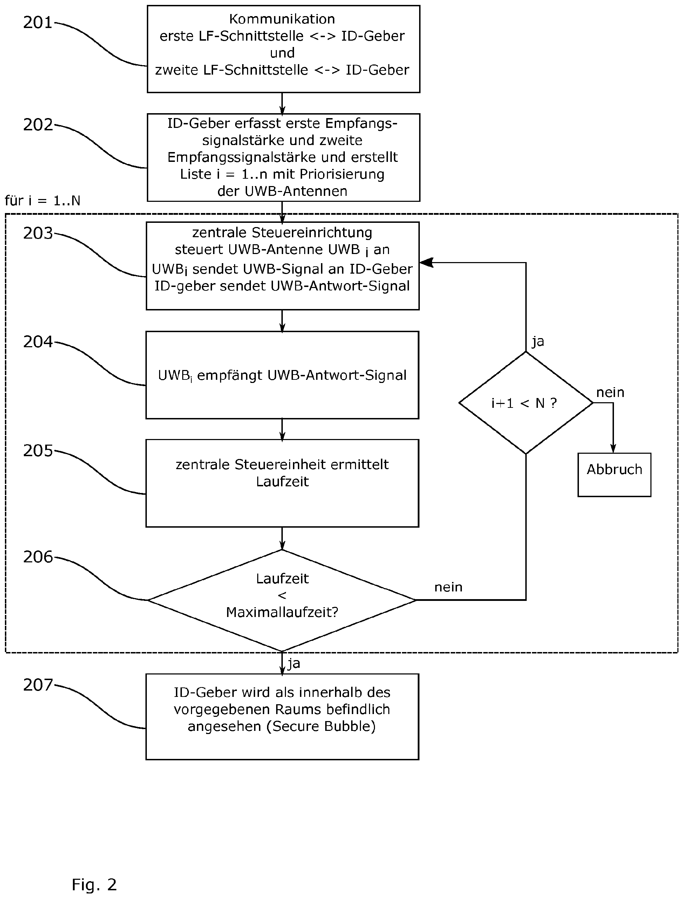

In der beispielhaften Verfahrensfolge des erfindungsgemäßen Verfahrens, wie sie in Fig. 2 dargestellt ist, wird in einem ersten Schritt eine LF-Kommunikation zwischen der ersten LF-Schnittstelle und dem ID-Geber sowie der zweiten LF-Schnittstelle und dem ID-Geber vorgenommen. Dies kann beispielsweise in Reaktion auf eine Betätigung eines Annäherungssensors oder infolge eines Pollens erfolgen, wobei dies für die prinzipielle Funktionsweise der gezeigten Verfahrensfolge von nachrangiger Bedeutung ist.

Im Rahmen des Schritts 202 erfasst der ID-Geber eine erste Signalstärke des ersten LF-Signals und eine zweite Signalstärke des zweiten LF-Signals. Nach Erfassen der ersten und der zweiten Signalstärke übermittelt der ID-Geber die Signalstärken an Authentifizierungsanordnungen mittels einer im Rahmen einer LF-Übertragung übermittelten Nachricht. Die erfassten Daten werden von einem Steuermittel der Authentifizierungsanordnung, die sowohl mit den LF-Schnittstellen als auch mit den UWB-Antennen gekoppelt ist, erhalten und an die fahrzeugseitige Steuereinrichtung zur Auswertung übermittelt. Die Auswertung könnte auch alternativ im Schlüssel stattfinden. Die Steuereinrichtung generiert eine Liste, in welcher diejenige der UWB-Antennen für das erste Ansteuern der UWB-Antenne ausgewählt ist, die derjenigen LF-Schnittstelle zugeordnet ist, die das LF-Signal mit der höchsten der LF-Signalstärken ausgesendet hat.

In der gezeigten Verfahrensfolge bedeutet dies, dass, wenn die erste Signalstärke größer ist als die zweite Signalstärke, in der Liste die erste UWB-Antenne vor der zweiten UWB-Antenne positioniert ist.

Mit Schritt 201 und Schritt 202 wurde also eine UWB-Antenne aus der Anzahl der UWB-Antennen als ausgewählte UWB-Antenne ausgewählt. Die Auswahl erfolgte in Abhängigkeit von einer Empfangssignalstärke, beispielsweise einem RSSI-Wert, des ersten LF-Signals, das zwischen dem ID-Geber und der Authentifizierungsanordnung gesendet wurde. Zusätzlich zu der ersten ausgewählten UWB-Antenne wurde die zweite UWB-Antenneals zweite ausgewählte UWB-Antenne bestimmt, sodass die Liste eine Anzahl von ausgewählten Antennen umfasst.

In einem nächsten Schritt 203 wird gemäß der in der Liste vorgegebenen Priorisierung zuerst die erste UWB-Antenne, UWB₁, aus einem nicht sende- und/oder empfangsbereiten Zustand in einen sendebereiten Zustand versetzt, indem die erste UWB-Antenne von der zentralen Steuereinrichtung angesteuert wird. Die erste UWB-Antenne sendet ein erstes UWB-Signal an den ID-Geber. Das UWB-Signal wird sodann von einem UWB-Transceiver des ID-Gebers empfangen und mit einem UWB-Antwortsignal beantwortet. Das Signal wird in Schritt 204 von der ersten UWB-Antenne empfangen. Unter Einbeziehung der fahrzeugseitigen Steuereinrichtung wird die Laufzeit ermittelt, welche das UWB-Signal auf dem Hinweg zum ID-Geber und zusätzlich auf dem Rückweg von dem ID-Geber benötigt hat, wobei eine entsprechende Berechnungszeit innerhalb des ID-Gebers der Steuereinrichtung bekannt ist und dadurch aus der tatsächlich erfassten Zeitdauer herausgerechnet werden kann. In dem Schritt 205 wird die Laufzeit von der zentralen Steuereinrichtung berechnet und in Schritt 206 wird geprüft, ob die Laufzeit des UWB-Signals kleiner ist als eine vorgegebene Maximallaufzeit. Wenn dies der Fall ist, gilt der ID-Geber für das Authentifizierungssystem als innerhalb des Raums befindlich, in welchem eine Freigabe der Fahrzeugfunktion ermöglicht wird (Secure Bubble). Ferner gilt eine Kompromittierung des Signals, beispielsweise durch eine Relay-Station-Attacke, als nicht erfolgt. Wenn hingegen in Schritt 206 festgestellt wird, dass die Laufzeit größer ist als die vorgegebene Maximallaufzeit, wird beginnend mit Schritt 203 die Verfahrensfolge der Schritte 203 bis 206 wiederholt, wobei auf das nächste Listenelement der Liste mit den Listenelementen i = 1..N zurückgegriffen wird. In diesem Beispiel handelt es sich bei dem nächsten Listenelement um die zweite UWB-Antenne. Es wird daher sodann die zweite UWB-Antenne als zweite ausgewählte Antenne angesteuert, sodass erneut eine Laufzeitmessung durch die zweite UWB-Schnittstelle initiiert wird.

Die Schritte 203 bis 206 werden für alle UWB-Antennen i = 1..N der Liste durchgeführt, wobei dem Listenelement i das nachfolgende Listenelement i + 1 folgt und wobei ein Abbruch spätestens dann erfolgt, wenn entweder der ID-Geber als innerhalb des vorgegebenen Raums befindlich anzusehen ist oder wenn die Liste abgearbeitet ist.

Wenn der ID-Geber als innerhalb des vorgegebenen Raums befindlich anzusehen ist, ist die notwendige Voraussetzung für die Authentifizierung des ID-Gebers erfüllt. In einem abschließenden Schritt werden gegebenenfalls erforderliche weitere Voraussetzungen geprüft, beispielsweise über einen Austausch kryptographischer Informationen, und die Authentifizierung wird bei erfolgreicher Auswertung der kryptographischen Informationen abgeschlossen.

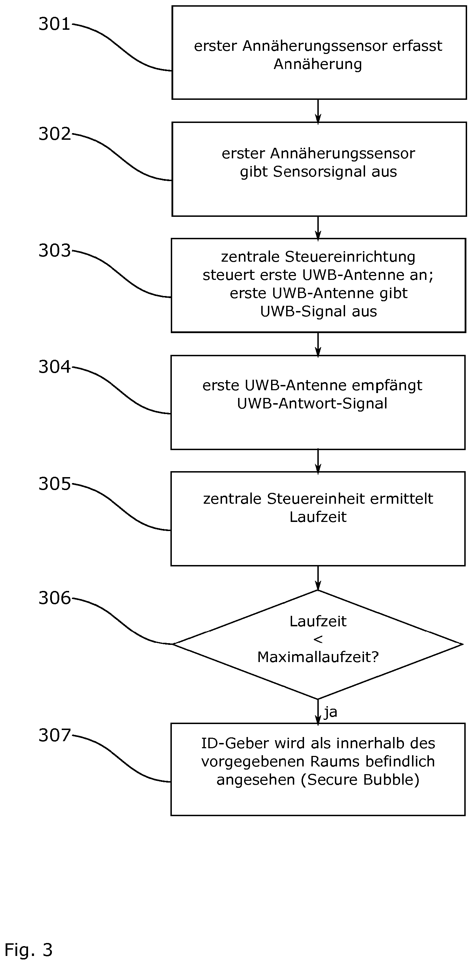

Die der Fig. 3 zu entnehmende Verfahrensfolge unterscheidet sich von der in Fig. 2 dargestellten Verfahrensfolge dadurch, dass in Schritt 301 eine Annäherung des Bedieners von dem ersten Annäherungssensor erfasst wird. Der erste Annäherungssensor gibt in Schritt 302 ein Annäherungssignal an die zentrale Steuereinrichtung aus, wobei die Steuereinrichtung der Authentifizierungsanordnung erkennt, welcher der Annäherungssensoren die Annäherung erfasst hat. In der gezeigten Verfahrensfolge hat der erste Annäherungssensor eine Annäherung erfasst, weswegen die erste UWB-Antenne als ausgewählte UWB-Antenne bestimmt wird und die Schritte 303 bis 307 in einer der Fig. 2 analogen Vorgehensweise durchgeführt werden.

## Patentansprüche

1. Verfahren zum Betreiben eines Authentifizierungsystems (1) eines Fahrzeugs (3) zur Authentifizierung eines portablen ID-Gebers (2) gegenüber dem Fahrzeug (3) zur Freigabe von Fahrzeugfunktionen für einen Bediener (4), der den portablen ID-Geber (2) mit sich führt,
wobei das Authentifizierungssystem den portablen ID-Geber (2) und eine fahrzeugseitige Authentifizierungsanordnung (5) umfasst, wobei die Authentifizierungsanordnung (5) eine Anzahl von UWB-Antennen (6, 7) umfasst mit wenigstens einer ersten UWB-Antenne (6) und einer zweiten UWB-Antenne (7), die voneinander beabstandet an dem Fahrzeug (3) angeordnet sind,
wobei das Verfahren zumindest die folgenden Schritte umfasst:
A) Auswählen einer UWB-Antenne (6, 7) aus der Anzahl der UWB-Antennen (6, 7) der Authentifizierungsanordnung (5) als ausgewählte UWB-Antenne, wobei das Auswählen der UWB-Antenne in Schritt A) das Erstellen einer Liste umfasst, welche eine Priorisierung der UWB-Antennen vorgibt, sodass bereits vor Durchführung einer UWB-Kommunikation eine Reihenfolge der vorhandenen UWB-Antennen bestimmt wird, in welcher die UWB-Antennen angesteuert werden, wobei das Auswählen der UWB-Antenne erfolgt zumindest
- in Abhängigkeit von einer Empfangssignalstärke eines LF-Signals, das zwischen dem ID-Geber (2) und einer LF-Schnittstelle (8, 9) der Authentifizierungsanordnung (5) gesendet wird, und/oder
- in Abhängigkeit von einer Empfangssignalstärke eines HF-Signals, das zwischen dem ID-Geber (2) und einer HF-Schnittstelle der Authentifizierungsanordnung gesendet wird, und/oder
- in Abhängigkeit von einem Annäherungssignal eines Annäherungssensors (10, 11), der an dem Fahrzeug (3) angeordnet ist;
wobei zumindest die Schritte B)-E) sequentiell für jede UWB-Antenne der priorisierenden Liste unter Berücksichtigung der durch die Liste vorgegebenen Priorisierung der UWB-Antennen wiederholt werden, bis eine vorgegebene Abbruchbedingung erreicht ist,
B) Ansteuern der ausgewählten UWB-Antenne zum Durchführen einer UWB-Kommunikation zwischen dem ID-Geber (2) und der Authentifizierungsanordnung (5);
C) Durchführen der UWB-Kommunikation zwischen dem ID-Geber (2) und der Authentifizierungsanordnung (5);
D) Erfassen einer Laufzeit eines UWB-Signals der UWB-Kommunikation zwischen dem ID-Geber (2) und der ausgewählten UWB-Antenne;
E) Prüfen, ob die Laufzeit des UWB-Signals kleiner ist als eine vorgegebene Maximallaufzeit.

2. Verfahren nach Anspruch 1, **dadurch gekennzeichnet, dass** die Schritte B)-E) mit einer ersten ausgewählten UWB-Antenne durchgeführt werden und,
wenn die Laufzeit des UWB-Signals zwischen dem ID-Geber (2) und der ersten ausgewählten Antenne größer ist als eine vorgegebene Maximallaufzeit,
zumindest die Schritte B)-E) mit einer zweiten ausgewählten UWB-Antenne durchgeführt werden zum Prüfen, ob die Laufzeit des UWB-Signals zwischen dem ID-Geber (2) und der zweiten ausgewählten Antenne kleiner ist als die vorgegebene Maximallaufzeit, welche eine Position des ID-Gebers (2) innerhalb eines vorgegebenen Raums repräsentiert, der die zweite ausgewählte UWB-Antenne umgibt.

3. Verfahren nach Anspruch 1 oder nach Anspruch 2, **dadurch gekennzeichnet, dass** die Abbruchbedingung umfasst, dass die Laufzeit des UWB-Signals zwischen dem ID-Geber und der ausgewählten UWB-Antenne für eine vorgebene Unteranzahl der Anzahl der UWB-Antennen eine vorgegebene Maximalabweichung nicht überschreitet.

4. Verfahren nach einem der Ansprüche 1 bis 3, **dadurch gekennzeichnet, dass** vor einer Wiederholung der Schritte B)-E) die Liste angepasst wird.

5. Verfahren nach Anspruch 4, **dadurch gekennzeichnet, dass** eine UWB-Antenne vor der Wiederholung der Schritte B)-E) von der Liste entfernt wird, wenn
die Laufzeit des UWB-Signals eine vorgegebene maximale Laufzeitkontrollabweichung von der Laufzeit der UWB-Signale einer Menge der UWB-Antennen überschreitet, und/oder
eine Signalstärke des UWB-Signals eine vorgegebene maximale Signalstärkekontrollabweichung von der Signalstärke der UWB-Signale einer Menge der UWB-Antennen überschreitet.

6. Verfahren nach einem der vorhergehenden Ansprüche, **dadurch gekennzeichnet, dass**
die Authentifizierungsanordnung eine erste LF-Schnittstelle aufweist, welche der ersten UWB-Antenne zugeordnet ist und eine zweite LF-Schnittstelle aufweist, welche der zweiten UWB-Antenne zugeordnet ist,
wobei eine erste LF-Kommunikation mit einem ersten LF-Signal zwischen dem ID-Geber und der ersten LF-Schnittstelle sowie eine zweite LF-Kommunikation mit einem zweiten LF-Signal zwischen dem ID-Geber und der zweiten LF-Schnittstelle durchgeführt wird,
wobei der ID-Geber eine erste Signalstärke des ersten LF-Signals und eine zweite Signalstärke des zweiten LF-Signals erfasst und die Signalstärken an die Authentifizierungsanordnung übermittelt, wobei die Authentifizierungsanordnung diejenige der UWB-Antennen für das erste Ansteuern der UWB-Antenne auswählt, die der LF-Schnittstelle zugeordnet ist, die das LF-Signal mit der höchsten der LF-Signalstärken ausgesendet hat.

7. Verfahren nach einem der Ansprüche 1 bis 5, **dadurch gekennzeichnet, dass**
die Authentifizierungsanordnung eine erste HF-Schnittstelle aufweist, welche der ersten UWB-Antenne zugeordnet ist und eine zweite HF-Schnittstelle aufweist, welche der zweiten UWB-Antenne zugeordnet ist,
wobei eine erste HF-Kommunikation mit einen ersten HF-Signal zwischen dem ID-Geber und der ersten HF-Schnittstelle sowie eine zweite HF-Kommunikation mit einem zweiten HF-Signal zwischen dem ID-Geber und der zweiten HF-Schnittstelle durchgeführt wird,
wobei der ID-Geber eine erste Signalstärke des ersten HF-Signals und eine zweite Signalstärke des zweiten HF-Signals erfasst und die Signalstärken an die Authentifizierungsanordnung übermittelt, wobei die Authentifizierungsanordnung diejenige der ersten UWB-Antenne und der zweiten UWB-Antenne für das erste Ansteuern der UWB-Antenne auswählt, die der HF-Schnittstelle zugeordnet ist, die das HF-Signal mit der höchsten der ersten und der zweiten Signalstärke ausgesendet hat.

8. Verfahren nach einem der Ansprüche 1 bis 5, **dadurch gekennzeichnet, dass**
die Authentifizierungsanordnung einen ersten Annäherungssensor aufweist, welcher der ersten UWB-Antenne zugeordnet ist und einen zweiten Annäherungssensor aufweist, welcher der zweiten UWB-Antenne zugeordnet ist,
wobei, wenn einer der Annäherungssensoren eine Annäherung des Bedieners erfasst, dieser Annäherungssensor ein den Annäherungssensor identifizierendes Annäherungssignal ausgibt, und dass ein Steuermittel der Authentifizierungsanordnung, wenn er das Annäherungssignal erfasst, diejenige der ersten UWB-Antenne und der zweiten UWB-Antenne als ausgewählte UWB-Antenne auswählt, die demjenigen des ersten Annäherungssensors und des zweiten Annäherungssensors zugeordnet ist, die das Annäherungssignal ausgegeben hat.

9. Verfahren nach einem der vorhergehenden Ansprüche, **dadurch gekennzeichnet, dass** das Durchführen der UWB-Kommunikation zumindest zeitweise parallel mit dem Durchführen einer LF-Kommunikation oder einer HF-Kommunikation erfolgt.

10. Verfahren nach einem der vorhergehenden Ansprüche, **dadurch gekennzeichnet, dass** zur Freigabe von Fahrzeugfunktionen erfasste UWB-Signallaufzeiten für eine Mindestzeitdauer als gültig angesehen werden, und dass während der Mindestzeitdauer keine UWB-Kommunikation von der Authentifizierungsanordnung durchgeführt wird.

11. Verfahren nach einem der vorhergehenden Ansprüche, **dadurch gekennzeichnet dass**, nachdem die Prüfung in Schritt E ergeben hat, dass die Laufzeit des UWB-Signals der während dem Schritt C erfolgten UWB-Kommunikation zwischen dem ID-Geber und wenigstens einer ausgewählten UWB-Antenne kleiner ist als die vorgegebene Maximallaufzeit, anhand von während dem Schritt C zwischen dem ID-Geber und der fahrzeugseitigen Authentifizierungsanordnung übertragenen Authentifizierungsdaten die fahrzeugseitige Authentifizierungsanordnung eine Prüfung der Authentifizierung des ID-Gebers vornimmt und, wenn die Prüfung die Authentifizierung bestätigt, eine Freigabe der Funktion veranlasst.

12. Verfahren nach einem der vorhergehenden Ansprüche, wobei,
nachdem die Prüfung in Schritt E mit zumindest einer ausgewählten Antenne die Anwesenheit des ID-Gebers innerhalb eines Maximalabstands von der ausgewählten Antenne bestätigt hat, mittels einer HF-Kommunikation, einer LF-Kommunikation und/oder einer UWB-Kommunikation zwischen dem ID-Geber und einem kraftfahrzeugseitigen Steuergerät des Authentifizierungssystems übermittelte, bevorzugt im Anschluss an Schritt E übermittelte, kryptographische Informationen ausgewertet werden und anhand der Auswertung der kryptographischen Informationen in dem kraftfahrzeugseitigen Steuergerät die Authentifizierung des ID-Gebers abgeschlossen wird und nach erfolgreicher Authentifizierung die Freigabe der Funktion oder Funktionen veranlasst wird.

13. Verfahren nach einem der vorhergehenden Ansprüche, wobei eine Freigabe der Funktion für den Bediener fahrzeugseitig gesperrt ist, solange innerhalb eines vorgegebenen Maximalzeitraums nicht die Prüfung in Schritt E mit zumindest einer ausgewählten Antenne die Anwesenheit des ID-Gebers innerhalb eines Maximalabstands von der ausgewählten Antenne bestätigt hat.

14. Authentifizierungssystem (2, 5) eines Fahrzeugs (3) zur Authentifizierung eines portablen ID-Gebers (2) gegenüber dem Fahrzeug (3) zur Freigabe von Fahrzeugfunktionen für einen Bediener (4), der den portablen ID-Geber (2) mit sich führt,
wobei das Authentifizierungssystem (2, 5) den portablen ID-Geber (2) und eine fahrzeugseitige Authentifizierungsanordnung (5) aufweist, wobei der portable ID-Geber (2) wenigstens eine erste ID-Geber-UWB-Schnittstelle mit einer ID-Geber-UWB-Antenne und die Authentifizierungsanordnung (5) wenigstens eine erste Fahrzeug-UWB-Schnittstelle (6') mit einer ersten UWB-Antenne (6) und eine zweite Fahrzeug-UWB-Schnittstelle (7') mit einer zweiten UWB-Antenne (7) aufweist, die voneinander beabstandet an dem Fahrzeug angeordnet sind, und wobei die erste ID-Geber-UWB-Schnittstelle und die Fahrzeug-UWB-Schnittstellen (6', 7') zur UWB-Kommunikation miteinander eingerichtet sind,
wobei ein Steuermittel (12) der Authentifizierungsanordnung (5) eingerichtet ist, ein Verfahren nach einem der vorhergehenden Ansprüche durchzuführen.

## Claims

1. Method of operating an authentication system (1) of a vehicle (3) for authenticating a portable ID transponder (2) to the vehicle (3) for enabling vehicle functions for a user (4) who carries the portable ID transponder (2),
wherein the authentication system comprises the portable ID transponder (2) and a vehicle-side authentication arrangement (5), the authentication arrangement (5) comprising a number of UWB antennas (6, 7) with at least a first UWB antenna (6) and a second UWB antenna (7) arranged spaced apart from each other on the vehicle (3),
wherein the method comprises at least the following steps:
A) selecting a UWB antenna (6, 7) from the number of UWB antennas (6, 7) of the authentication arrangement (5) as the selected UWB antenna, wherein the selection of the UWB antenna in step A) comprises the creation of a list, which specifies a prioritization of the UWB antennas, so that an order of the available UWB antennas is already determined before a UWB communication is carried out, in which order the UWB antennas are addressed, wherein the selection of the UWB antenna is carried out at least
- depending on a received signal strength of an LF signal transmitted between the ID transponder (2) and an LF interface (8, 9) of the authentication arrangement (5), and/or
- depending on a received signal strength of an RF signal transmitted between the ID transponder (2) and an RF interface of the authentication arrangement, and/or
- depending on a proximity signal from a proximity sensor (10, 11) arranged on the vehicle (3);
wherein at least steps B)-E) are repeated sequentially for each UWB antenna of the prioritizing list, taking into account the prioritization of the UWB antennas given by the list, until a predetermined termination condition is reached,
B) driving the selected UWB antenna to perform UWB communication between the ID transponder (2) and the authentication arrangement (5);
C) performing UWB communication between the ID transponder (2) and the authentication arrangement (5);
D) detecting a propagation delay of a UWB signal of the UWB communication between the ID transponder (2) and the selected UWB antenna;
E) checking whether the propagation time of the UWB signal is less than a specified maximum propagation time.

2. Method according to claim 1, **characterized in that** steps B)-E) are performed with a first selected UWB antenna and,
if the propagation time of the UWB signal between the ID transponder (2) and the first selected antenna is greater than a predetermined maximum propagation time,
at least steps B)-E) are performed with a second selected UWB antenna for checking whether the propagation time of the UWB signal between the ID transponder (2) and the second selected antenna is smaller than the predetermined maximum propagation time representing a position of the ID transponder (2) within a predetermined space surrounding the second selected UWB antenna.

3. Method according to claim 1 or according to claim 2, **characterized in that** the termination condition comprises that the propagation time of the UWB signal between the ID transmitter and the selected UWB antenna does not exceed a predetermined maximum deviation for a predetermined sub-set of the number of UWB antennas.

4. Method according to any one of claims 1 to 3, **characterized in that**, before a repetition of steps B)-E), the list is adapted.

5. Method according to claim 4, **characterized in that** a UWB antenna is removed from the list prior to the repetition of steps B)-E), if
the propagation time of the UWB signal exceeds a predetermined maximum propagation time control deviation from the propagation time of the UWB signals of a set of the UWB antennas, and/or
a signal strength of the UWB signal exceeds a predetermined maximum signal strength control deviation from the signal strength of the UWB signals of a set of the UWB antennas.

6. Method according to any one of the preceding claims, **characterized in that**
the authentication arrangement comprises a first LF interface associated with the first UWB antenna and a second LF interface associated with the second UWB antenna,
wherein a first LF communication with a first LF signal is performed between the ID transponder and the first LF interface, and a second LF communication with a second LF signal is performed between the ID transponder and the second LF interface,
wherein the ID transponder detects a first signal strength of the first LF signal and a second signal strength of the second LF signal and communicates the signal strengths to the authentication arrangement, wherein the authentication arrangement selects that one of the UWB antennas for first driving the UWB antenna that is associated with the LF interface that transmitted the LF signal having the highest of the LF signal strengths.

7. Method according to any one of claims 1 to 5, **characterized in that**
the authentication arrangement comprises a first RF interface associated with the first UWB antenna and a second RF interface associated with the second UWB antenna,
wherein a first RF communication is performed with a first RF signal between the ID transponder and the first RF interface, and a second RF communication is performed with a second RF signal between the ID transponder and the second RF interface,
wherein the ID transponder detects a first signal strength of the first RF signal and a second signal strength of the second RF signal and communicates the signal strengths to the authentication arrangement, wherein the authentication arrangement selects that one of the first UWB antenna and the second UWB antenna for first driving the UWB antenna that is associated with the RF interface that transmitted the RF signal having the highest of the first and second signal strengths.

8. Method according to any one of claims 1 to 5, **characterized in that**
the authentication arrangement comprises a first proximity sensor associated with the first UWB antenna and a second proximity sensor associated with the second UWB antenna,
wherein, when one of the proximity sensors detects an approach of the user, that proximity sensor outputs a proximity signal identifying the proximity sensor, and **in that** a control means of the authentication arrangement, when it detects the proximity signal, selects as the selected UWB antenna that one of the first UWB antenna and the second UWB antenna which is associated with that one of the first proximity sensor and the second proximity sensor which outputted the proximity signal.

9. Method according to any one of the preceding claims, **characterized in that** said carrying out of the UWB communication is carried out at least temporarily in parallel with said carrying out of an LF communication or an RF communication.

10. Method according to any one of the preceding claims, **characterized in that** UWB signal propagation times detected for enabling vehicle functions are considered valid for a minimum time period, and **in that** no UWB communication is performed by the authentication arrangement during said minimum time period.

11. Method according to any one of the preceding claims, **characterized in that**, after the check in step E has shown that the propagation time of the UWB signal of the UWB communication between the ID transponder and at least one selected UWB antenna, which takes place during step C, is less than the predetermined maximum propagation time, the authentication arrangement on the vehicle side carries out a check of the authentication of the ID transponder on the basis of authentication data transmitted between the ID transponder and the authentication arrangement on the vehicle side during step C and, if the check confirms the authentication, initiates an enabling of the function.

12. Method according to any one of the preceding claims, wherein,
after the check in step E with at least one selected antenna has confirmed the presence of the ID transponder within a maximum distance from the selected antenna, cryptographic information is transmitted by means of an RF communication, an LF communication and/or a UWB communication between the ID transponder and a motor vehicle-side control unit of the authentication system, preferably transmitted after step E, is evaluated and the authentication of the ID transponder is completed in the control unit on the motor vehicle side on the basis of the evaluation of the cryptographic information and, after successful authentication, the release of the function or functions is initiated.

13. Method according to any one of the preceding claims, wherein release of the function for the operator is blocked on the vehicle side as long as, within a predetermined maximum time period, the check in step E with at least one selected antenna has not confirmed the presence of the ID transponder within a maximum distance from the selected antenna.

14. Authentication system (2, 5) of a vehicle (3) for authenticating a portable ID transponder (2) to the vehicle (3) to enable vehicle functions for an operator (4) carrying the portable ID transponder (2),
wherein the authentication system (2, 5) comprises the portable ID transponder (2) and an on-vehicle authentication arrangement (5), wherein the portable ID transponder (2) comprises at least a first ID transponder UWB interface with an ID transponder UWB antenna and the authentication arrangement (5) comprises at least a first vehicle UWB interface (6') with a first UWB antenna (6) and a second vehicle UWB interface (7') with a second UWB antenna (7) which are arranged at a distance from one another on the vehicle, and wherein the first ID transmitter UWB interface and the vehicle UWB interfaces (6', 7') are set up for UWB communication with one another,
wherein a control means (12) of the authentication arrangement (5) is adapted to perform a method according to any one of the preceding claims.

## Revendications

1. Procédé pour faire fonctionner un système d'authentification (1) d'un véhicule (3) pour authentifier un transpondeur d'identification portable (2) par rapport au véhicule (3) pour permettre des fonctions de véhicule pour un opérateur (4) portant le transpondeur d'identification portable (2),
dans lequel le système d'authentification comprend le transpondeur d'identification portable (2) et un dispositif d'authentification côté véhicule (5), le dispositif d'authentification (5) comprenant un certain nombre d'antennes UWB (6, 7) avec au moins une première antenne UWB (6) et une seconde antenne UWB (7) disposées à une certaine distance l'une de l'autre sur le véhicule (3),
dans lequel le procédé comprend au moins les étapes suivantes :
A) sélectionner une antenne UWB (6, 7) parmi le nombre d'antennes UWB (6, 7) du dispositif d'authentification (5) en tant qu'antenne UWB sélectionnée, dans lequel la sélection de l'antenne UWB à l'étape A) comprend la création d'une liste qui spécifie une hiérarchisation des antennes UWB de sorte qu'un ordre des antennes UWB disponibles est déterminé avant qu'une communication UWB soit effectuée, spécifiant un ordre dans lequel les antennes UWB sont adressées, dans lequel la sélection de l'antenne UWB est effectuée au moins
- en fonction d'une intensité de signal reçue d'un signal BF transmis entre le transpondeur d'identification (2) et une interface BF (8, 9) du dispositif d'authentification (5), et/ou
- en fonction de l'intensité du signal reçu d'un signal RF transmis entre le transpondeur d'identification (2) et une interface RF du dispositif d'authentification,
et/ou
- en réponse à un signal de proximité provenant d'un capteur de proximité (10, 11) disposé sur le véhicule (3) ;
dans lequel au moins les étapes B)-E) sont répétées séquentiellement pour chaque antenne UWB de la liste de priorisation, en tenant compte de la priorisation des antennes UWB donnée par la liste, jusqu'à ce qu'une condition de fin prédéterminée soit atteinte,
B) commander l'antenne UWB sélectionnée pour effectuer une communication UWB entre le transpondeur d'identification (2) et le dispositif d'authentification (5) ;
C) réaliser une communication UWB entre le transpondeur d'identification (2) et le dispositif d'authentification (5) ;
D) détecter un retard de propagation d'un signal UWB de la communication UWB entre le transpondeur d'identification (2) et l'antenne UWB sélectionnée ;
E) vérifier si le temps de propagation du signal UWB est inférieur à un temps de propagation maximal spécifié.

2. Procédé selon la revendication 1, **caractérisé en ce que** les étapes B)-E) sont réalisées avec une première antenne UWB sélectionnée, et,
si le temps de propagation du signal UWB entre le transpondeur d'identification (2) et la première antenne sélectionnée est supérieur à un temps de propagation maximal prédéterminé,
au moins les étapes B)-E) sont réalisées avec une deuxième antenne UWB sélectionnée pour vérifier si le temps de propagation du signal UWB entre le transpondeur (2) et la deuxième antenne sélectionnée est inférieur au temps de propagation maximal prédéterminé représentant une position du transpondeur d'identification (2) dans un espace prédéterminé entourant la deuxième antenne UWB sélectionnée.

3. Procédé selon la revendication 1 ou selon la revendication 2, **caractérisé en ce que** la condition de terminaison comprend que le temps de propagation du signal UWB entre le transpondeur d'identification et l'antenne UWB sélectionnée ne dépasse pas un écart maximal prédéterminé pour un sous-nombre prédéterminé du nombre d'antennes UWB.

4. Procédé selon l'une quelconque des revendications 1 à 3, **caractérisé en ce que**, avant une répétition des étapes B)-E), la liste est adaptée.

5. Procédé selon la revendication 4, **caractérisé en ce qu'**une antenne UWB est retirée de la liste avant de répéter les étapes B)-E) si
le retard de propagation du signal UWB dépasse un écart maximal prédéterminé de contrôle du retard de propagation par rapport au retard de propagation des signaux UWB d'un ensemble d'antennes UWB, et/ou
une intensité de signal du signal UWB dépasse un écart de commande d'intensité de signal maximum prédéterminé par rapport à l'intensité de signal des signaux UWB d'un ensemble des antennes UWB.

6. Procédé selon l'une quelconque des revendications précédentes, **caractérisé en ce que**
le dispositif d'authentification comprend une première interface LF associée à la première antenne UWB et une seconde interface LF associée à la seconde antenne UWB,
dans lequel une première communication BF avec un premier signal BF est effectuée entre le transpondeur d'identification et la première interface BF, et une seconde communication BF avec un second signal BF est effectuée entre le transpondeur d'identification et la seconde interface BF,
dans lequel le transpondeur d'identification détecte une première intensité de signal du premier signal BF et une seconde intensité de signal du second signal BF et communique les intensités de signal au dispositif d'authentification, dans lequel le dispositif d'authentification sélectionne celle des antennes UWB pour commander en premier l'antenne UWB qui est associée à l'interface BF qui a transmis le signal BF ayant la plus grande des intensités de signal BF.

7. Procédé selon l'une quelconque des revendications 1 à 5, **caractérisé en ce que**
le dispositif d'authentification comprend une première interface RF associée à la première antenne UWB et une seconde interface RF associée à la seconde antenne UWB,
dans lequel une première communication RF est effectuée avec un premier signal RF entre le transpondeur d'identification et la première interface RF et une seconde communication RF est effectuée avec un second signal RF entre le transpondeur d'identification et la seconde interface RF,
dans lequel le transpondeur d'identification détecte une première intensité de signal du premier signal RF et une seconde intensité de signal du second signal RF et communique les intensités de signal au dispositif d'authentification, dans lequel le dispositif d'authentification sélectionne celle de la première antenne UWB et de la seconde antenne UWB pour piloter en premier l'antenne UWB qui est associée à l'interface RF qui a transmis le signal RF ayant la plus grande des première et seconde intensités de signal.

8. Procédé selon l'une quelconque des revendications 1 à 5, **caractérisé en ce que**
le dispositif d'authentification comprend un premier capteur de proximité associé à la première antenne UWB et un second capteur de proximité associé à la seconde antenne UWB,
dans lequel, lorsque l'un des capteurs de proximité détecte une approche de l'opérateur, ce capteur de proximité émet un signal de proximité identifiant le capteur de proximité, et **en ce qu'**un moyen de commande du dispositif d'authentification, lorsqu'il détecte le signal de proximité, sélectionne comme antenne UWB sélectionnée celle de la première antenne UWB et de la seconde antenne UWB qui est associée à celui du premier capteur de proximité et du second capteur de proximité qui a émis le signal de proximité.

9. Procédé selon l'une quelconque des revendications précédentes, **caractérisé en ce que** la réalisation de la communication UWB est effectuée au moins temporairement en parallèle avec la réalisation d'une communication BF ou d'une communication RF.

10. Procédé selon l'une quelconque des revendications précédentes, **caractérisé en ce que** les temps de propagation des signaux UWB détectés pour permettre des fonctions du véhicule sont considérés comme valables pour une période de temps minimale, et **en ce qu'**aucune communication UWB n'est effectuée par le dispositif d'authentification pendant la période de temps minimale.

11. Procédé selon l'une des revendications précédentes, **caractérisé en ce que**, après que le contrôle à l'étape E a montré que le temps de propagation du signal UWB de la communication UWB entre le transpondeur d'identification et au moins une antenne UWB sélectionnée qui a lieu pendant l'étape C est inférieur au temps de propagation maximal prédéterminé, le dispositif d'authentification côté véhicule effectue un contrôle de l'authentification du transpondeur sur la base des données d'authentification transmises entre le transpondeur d'identification et le dispositif d'authentification côté véhicule pendant l'étape C et, si le contrôle confirme l'authentification, lance une validation de la fonction.

12. Procédé selon l'une quelconque des revendications précédentes, dans lequel,
après que la vérification à l'étape E avec au moins une antenne sélectionnée a confirmé la présence du transpondeur d'identification dans une distance maximale de l'antenne sélectionnée, des informations cryptographiques sont transmises au moyen d'une communication HF, d'une communication LF et/ou d'une communication UWB entre le transpondeur et une unité de commande côté véhicule du système d'authentification, l'information cryptographique, de préférence transmise après l'étape E, est évaluée et l'authentification du transpondeur d'identification est achevée dans l'unité de commande du côté du véhicule à moteur sur la base de l'évaluation de l'information cryptographique et, après une authentification réussie, la libération de la fonction ou des fonctions est initiée.

13. Procédé selon l'une quelconque des revendications précédentes, dans lequel une activation de la fonction pour l'opérateur est inhibée côté véhicule tant que, dans une période de temps maximale prédéterminée, le contrôle à l'étape E avec au moins une antenne sélectionnée n'a pas confirmé la présence du transpondeur dans une distance maximale de l'antenne sélectionnée.

14. Système d'authentification (2, 5) d'un véhicule (3) pour authentifier un transpondeur d'identification portable (2) au véhicule (3) afin de permettre les fonctions du véhicule pour un opérateur (4) portant le transpondeur d'identification portable (2),
dans lequel le système d'authentification (2, 5) comprend le transpondeur d'identification portable (2) et un dispositif d'authentification (5) côté véhicule, dans lequel le transpondeur d'identification portable (2) comprend au moins une première interface UWB de transpondeur d'identification avec une antenne UWB de transpondeur d'identification et le dispositif d'authentification (5) comprend au moins une première interface UWB de véhicule (6') avec une première antenne UWB (6) et une deuxième interface UWB de véhicule (7') avec une deuxième antenne UWB (7) qui sont disposées sur le véhicule à distance l'une de l'autre, et la première interface UWB de l'émetteur d'identification et les interfaces UWB du véhicule (6', 7') étant configurées pour une communication UWB entre elles,
dans lequel un moyen de commande (12) du dispositif d'authentification (5) est adapté pour exécuter un procédé selon l'une quelconque des revendications précédentes.
